# EUROPEAN PATENT APPLICATION

(11) **EP 4 556 368 A1**
(43) Date of publication of application: **21.05.2025**
(21) Application number: 23210327.5
(22) Date of filing: 16.11.2023
(51) Int. Cl.: B64D 11/00, B64D 11/04

(54) **RETAINER ASSEMBLY**

(71) Applicant: B/E Aerospace, Inc., Winston Salem, NC 27105 (US)
(72) Inventor: CUNANAN, Jeriel Biñas, 4232 Tanauan City (PH); RUNAS, Oliver Bumatay, 4232 Tanauan City (PH)
(74) Representative: Dehns

(57) **Abstract**

The present invention relates to a retainer assembly (10) for retaining a container (52, 54) within a compartment of an aircraft galley. The assembly includes a housing (12) comprising an opening (11), a frame (16) defining a retainer slot (17) located within the housing and arranged to be fixed relative to the housing, a retainer (18) configured to be located in the retainer slot (17), wherein the retainer (18) and retainer slot (17) are arranged to allow linear motion of the retainer within the retainer slot in a first direction away from and towards the opening and restrict movement of the retainer in all other directions; and a rotatable shaft (14) extending through at least a first wall of the housing (12) and the frame (16) in a second direction perpendicular to the first direction. The rotatable shaft (14) and the retainer (18) are arranged so that the rotation of the rotatable shaft causes a linear motion of the retainer within the retainer slot between a stowed position and deployed position. The invention further extends to an aircraft galley (50) compartment incorporating the retainer assembly (10), and a method of retaining a container (52, 54) within an aircraft compartment (50).

## Description

The field of the present invention relates to a retainer assembly for retaining a container within a compartment of an aircraft. The present invention further relates to an aircraft galley compartment comprising the retainer assembly, and a method of retaining a container within a compartment.

An aircraft galley includes an area for storing and preparing food and beverages, as well as an area for storing equipment required by the aircraft crew, such as emergency equipment. The aircraft galley is divided into a number of compartments which are designed to house one or more containers.

The containers used on aircraft are known as Standard Unit (SU) containers which are common across all aircraft types and airline operators.

The compartments are therefore sized to accommodate the SU containers, which can be slid into and out of the compartments. When a specific SU container is not in use, it is necessary for it to be held in position within the compartment so that the vibrations and other movements of the aircraft do not cause the container to fall out of the respective compartment.

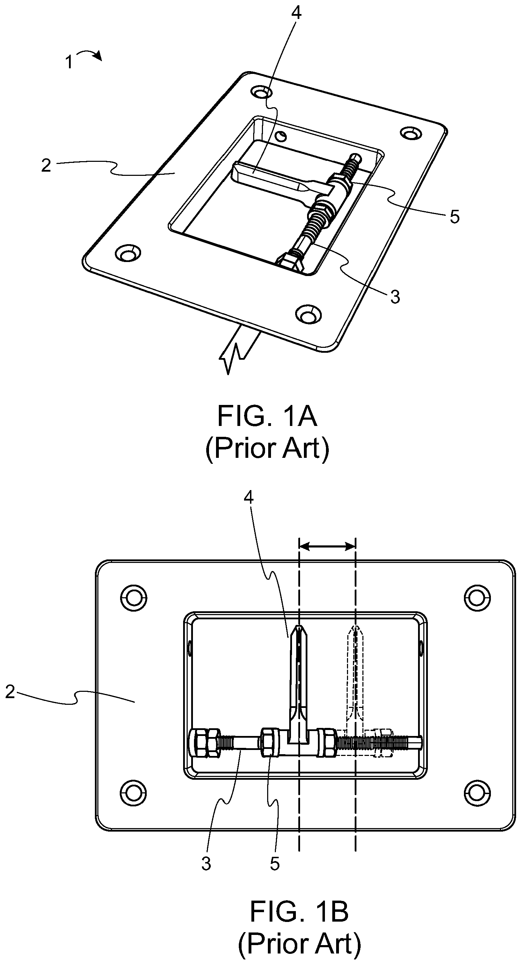

Figures 1A and 1B depict a known design within the state of the art for a retainer used to retain a container in a position within the compartment. The retainer comprises a rod extending along the length of a panel which forms an inner surface of the container. A blade is connected to, and extends from the rod. This blade is rotatable between a stowed position and a deployed position.

In the deployed position, the blade of the retainer extends into the compartment and is positioned within the path of the container to retain it in position.

The retainer further comprises nuts and washers either side of the blade which can be loosened to adjust the precise position of the blade depending on the size of the container stored within the compartment.

A number of problems have been identified with this existing retainer during use which can result in damaged and sometimes ineffective retainers. Firstly, over time the rods on which the retainer blades are mounted bend due to the loads received by the retainer blade from the containers. A significant bend in the rod can prevent the blade from being adjustable, and can lead to the rod shearing entirely.

Another problem identified is that over time the washers used to constrain the blade in the required position can become loose. This may be the result of misuse by the aircraft crew, or due to the frequency of the vibrations present on the aircraft which cause the washers to loosen over time and move along the rod. This means that the blade is not properly held in position resulting in the container being improperly retained in position allowing it to move within the compartment. This movement within the compartment can cause heavy impact on the blade, damaging the blade and the rod further.

These problems can result in the retainer assemblies being damaged frequently and requiring frequent maintenance and replacement. In the meantime, if a failure goes unnoticed then the retainer assembly would be compromised such that the container cannot be properly held in the required position, and its overall function is therefore diminished.

There is therefore a need to provide a retainer assembly which overcomes the abovementioned problems.

Viewed from a first aspect, there is provided a retainer assembly for retaining a container within a compartment of an aircraft galley, the assembly comprising: a housing comprising an opening; a frame defining a retainer slot located within the housing and arranged to be fixed relative to the housing, wherein the retainer slot, a retainer configured to be located in the retainer slot such that the retainer extends from the end of the retainer slot towards the opening of the housing, wherein the retainer and retainer slot are arranged to allow linear motion of the retainer within the retainer slot in a first direction away from and towards the opening and restrict movement of the retainer in all other directions; and a rotatable shaft extending through at least a first wall of the housing and the frame in a second direction perpendicular to the first direction; wherein the arrangement of the rotatable shaft and the retainer is configured such that a rotation of the rotatable shaft between a first position and second position causes linear motion of the retainer within the retainer slot in the first direction between a stowed position and a deployed position.

In the stowed position the retainer may be configured to be positioned within the housing, and in the deployed position at least a portion of the retainer may be configured to be positioned outside of the housing via the opening.

The arrangement of the rotatable shaft and the retainer may comprise a scotch yoke or slotted link mechanism.

The rotatable shaft may comprise a reduced diameter portion offset from the centreline of the rotatable shaft.

The reduced diameter portion of the rotatable shaft may be arranged to engage with the retainer such that the rotation of the rotatable shaft may cause the linear motion of the retainer within the retainer slot.

The retainer may comprise a second slot configured to house the reduced diameter portion of the rotatable shaft to form a scotch yoke or slotted link mechanism.

The frame may comprise one or more protrusions arranged to engage with one or more positioning slots within an inner wall of the housing, wherein the one or more protrusions may be able translate along the length of the one or more positioning slots to thereby adjust the position of the frame within the housing.

The frame may be fixed relative to the housing by one or more removable fastening devices via through-holes in at least one of the one or more protrusions.

A length of the reduced diameter portion of the shaft may correspond to a length of the one or more positioning slots.

Each of the one or more positioning slots may comprise an open end adjacent to a recess within an inner side wall of the container, wherein the recess may extend to the opening to allow removal of the frame from the housing.

Viewed from a second aspect, there is provided an aircraft galley compartment for housing at least one container, the compartment comprising: an opening for receiving the at least one container; at least one panel forming a surface of the compartment, wherein the at least one panel comprises a retainer assembly as described in the first aspect; and a rotatable handle arranged at a first end of the panel to allow a user to rotate the rotatable shaft.

The opening may be flush with the surface of the panel and faces into the compartment.

In the stowed position the retainer may be configured to be within housing such that it does not extend into the compartment, and in the deployed position the retainer may be configured to extend through the opening such that at least a portion of the retainer is located within the compartment to retain the at least one container in position.

The compartment may be for housing at least two containers, and wherein the retainer assembly may be positioned at a point between the at least two containers.

Viewed from a third aspect, there is provided a method of retaining a container within a compartment of an aircraft galley, the method comprising: providing a housing comprising opening; providing a frame defining a retainer slot located within the housing and arranged to be fixed relative to the housing, locating a retainer in the retainer slot, wherein the retainer and retainer slot allow linear motion of the retainer within the retainer slot in a first direction away from and towards the opening and restrict movement of the retainer in all other directions; and providing a rotatable shaft extending through at least a first wall of the housing and the frame in a second direction perpendicular to the first direction; rotating the rotatable shaft between a first position and a second position to cause a linear motion of the retainer within the retainer slot in the first direction between a stowed position and a deployed position.

The linear motion of the retainer may be caused by a scotch yoke or slotted mechanism which may be formed by a second slot in the retainer and a reduced diameter portion of the rotatable shaft, wherein the reduced diameter portion of the rotatable shaft may be offset from the centreline of the rotatable shaft.

Certain embodiments of the invention will now be described, by way of example only, with reference to the accompanying drawings, in which:
Figure 1A depicts a known retainer assembly;
Figure 1B depicts a known retainer assembly;
Figure 2 depicts a retainer assembly;
Figure 3 depicts an exploded view of the retainer assembly;
Figure 4 depicts a cut-away view of a housing of a retainer assembly;
Figure 5 depicts an adjustment mechanism for a retainer assembly
Figure 6A depicts a front view of a retainer assembly in a stowed position
Figure 6B depicts a front view of a retainer assembly in a deployed position;
Figure 7 depicts a schematic plan view of a retainer assembly in use; and
Figure 8 depicts an aircraft galley compartment.
Viewed form a first aspect, there is provided a retainer assembly for retaining a container within a compartment of an aircraft galley, the assembly comprising: a housing comprising an opening; a frame defining a retainer slot located within the housing and arranged to be fixed relative to the housing, a retainer configured to be located in the retainer slot, wherein the retainer and retainer slot are arranged to allow linear motion of the retainer within the retainer slot in a first direction away from and towards the opening and restrict movement of the retainer in all other directions; and a rotatable shaft extending through at least a first wall of the housing and the frame in a second direction perpendicular to the first direction; wherein the arrangement of the rotatable shaft and the retainer is configured such that a rotation of the rotatable shaft between a first position and second position causes linear motion of the retainer within the retainer slot in the first direction between a stowed position and a deployed position.

In the above arrangement, the frame is fixed relative to the housing, and the retainer slot and retainer are arranged so that the only relative movement between the retainer and the frame is in the first direction, i.e. into and out of the slot in the direction of the opening. Movement in the second direction which is perpendicular to the opening, is therefore restricted, and accordingly the position of the retainer relative to the housing is fixed in the second direction.

In use, this arrangement therefore means that any load applied to the retainer by the container within the compartment is transferred to the housing via the frame, instead of the shaft or rod as is the case in the known design discussed above. The housing would typically be stronger than the shaft and may be built directly into the wall of the compartment and is therefore able to withstand higher loads. This significantly reduces or entirely removes any load experienced in the rotatable shaft reducing the chance of the shaft bending or shearing as in the existing design. The primary purpose of the shaft in the present aspect is therefore to provide the necessary rotary motion to cause the linear motion of the retainer.

Therefore, the present invention means that any bending or shearing of the shaft will be prevented. This reduces any maintenance required and the assemblies will not need to be replaced as frequently as the known design. Additionally, the safety of the aircraft galley is improved as the container can be properly held in position.

In the stowed position, the retainer may be configured to be positioned within the housing. Alternatively, in the stowed position, a portion of the retainer may be positioned outside of the housing, but in operation the retainer may not be within a path of a container located within the compartment. In other words, when in the stowed condition, any containers located within a compartment may be able to move past the retainer assembly in use.

In the deployed position, at least a portion of the retainer may be configured to be positioned outside of the housing via the opening. In other words, as the rotatable shaft is rotated, the retainer may be arranged to move within the retainer slot and pass through the opening of the housing so at least a portion of the retainer may extend through the housing. In use, at least a portion of the retainer may extend through the opening into the path of a container located within the compartment. Accordingly, the retainer in the deployed position may be configured to prevent movement of the container.

The retainer may be located within the retainer slot such that in the stowed condition the entirety of the retainer is located within the retainer slot, or such that a significant proportion of the retainer is located within the retainer slot. The significant portion in this instance may be between 60-80% of the retainer. The remaining portion of the retainer may be located external to the retainer slot. In this instance, the frame may be dimensioned such that the height of the frame is smaller than the height of the housing by an amount proportional to the proportion of the retainer located in the frame.

The arrangement of the rotatable shaft and the retainer may form any suitable mechanism for converting rotary motion of the rotatable shaft to linear motion of the retainer within the retainer slot. For example, the arrangement of the rotatable shaft and the retainer may comprise a scotch yoke mechanism or a slotted link mechanism. It will be appreciated that the terms "scotch yoke" and "slotted link" refer to substantially the same mechanism and may therefore be used interchangeably throughout the present description. An alternative mechanism may comprise a cam fixed to the rotatable shaft at a point below the retainer such that during rotation of the rotatable shaft the cam forces the retainer to move within the slot.

The rotatable shaft may comprise a reduced diameter portion which may be offset from the centreline of the rotatable shaft. The reduced diameter portion may comprise a diameter which is in the region of 1% to 10% of the diameter of the other portions of the rotatable shaft. The reduced diameter portion may further be positioned proximate the outer circumference of the rotatable shaft.

In other words, the rotatable shaft may comprise a first portion and a second portion each having a first diameter, and a third portion disposed between the first portion and the second portion having a second diameter, wherein the second diameter may be less than the first diameter. Preferably the second diameter may be in the region of 1% to 10% of the first diameter.

The first portion, second portion and third portion of the rotatable shaft may be separate components joined together and may be joined together in a manner in which they can be separated for maintenance purposes.

Accordingly, each of the first portion, second portion and third portion may be formed separately.

As an alternative, the first portion and second portion of the rotatable shaft may have different diameters, for instance, the first portion may have a first diameter and the second portion may have a third diameter, wherein the first diameter and third diameter may be different. However, in any case, it will be appreciated that the second diameter, i.e. the diameter of the third portion disposed between the first portion and the second portion is less than both the first diameter and the third diameter. More specifically, the third portion may be a reduced diameter portion relative to the rest of the rotatable shaft.

An end surface of the first portion and an end surface off the second portion of the rotatable shaft may each have a recess for housing a respective end of the third portion. This means that the third portion, having a reduced diameter, may extend between the end surfaces of the first portion and the second portion, wherein the longitudinal axes of each of the first portion, second portion and third portion may be parallel, and preferably the longitudinal axes of the first portion and second portion may be coaxial, or axially aligned.

Each recess in the end surfaces of the first portion and the second portion may be offset from the centre line of each off the first portion and second portion. Therefore, the third portion may be positioned at a point which is offset from the centreline of the rotatable shaft. More specifically, each recess may be positioned proximate the outer circumference of the first portion and second portion of the rotatable shaft, so that the third portion may be positioned proximate the outer circumference of the rotatable shaft.

The third, reduced diameter, portion, may be held in position within the respective recesses using one or more cotter pins.

When assembled, the first, second and third portions may form the rotatable shaft having a reduced diameter portion.

The third portion may form between 1 % and 10% of the total length of the rotatable shaft. The minimum length of the third portion may correspond to the thickness of the retainer so that the third portion extends through at least the entire thickness of the container.

As an alternative arrangement the rotatable shaft may comprise a single integral unit having a reduced diameter portion. As an example, the rotatable shaft may be formed as a single shaft with a constant diameter along its length, which may be subsequently machined in order to provide the reduced diameter portion along a portion of its length. Another example may be where the rotatable shaft is formed using a casting process or additive manufacturing to include the three distinct portions, including the reduced diameter portion.

In either arrangement of the rotatable shaft described above, the reduced diameter portion may be arranged to engage the retainer such that the rotation of the rotatable shaft causes the linear motion of the retainer. This may include an arrangement whereby the reduced diameter portion of the rotatable shaft may be positioned proximate a lower surface of the retainer slot. The term "lower" in this regard may refer to a surface of the retainer which is furthest from the opening of the housing.

In the first position, the reduced diameter portion may be arranged such that it is at a lower position relative to the opening, and thereby the retainer may also be at a lower position, i.e. the stowed condition. Rotation of the rotatable shaft may cause the reduced diameter portion, which may be offset from the central axis of the rotatable shaft, to move to an upper position relative to the opening and the reduced portion may therefore urge against the lower surface of the retainer in order to cause the retainer to move linearly within the retainer slot to an upper position, i.e. deployed position.

The above arrangement whereby the reduced diameter portion urges against a lower surface of the retainer is one alternative and the retainer may be a solid piece of material. However, in a preferred arrangement the retainer may comprise a second slot which may be configured to house the reduced diameter portion of the rotatable shaft. This positioning of the reduced diameter portion within the slot of the retainer may form the scotch yoke mechanism or slotted link mechanism.

The second slot in the retainer may extend across a width of the retainer and may extend in a direction which is perpendicular to both the first direction and the second direction. In other words, the second slot may extend in a direction which is perpendicular to the central axis of the rotatable shaft and parallel with the opening in the housing.

In operation, at a first position the reduced diameter portion of the rotatable shaft may be at the lower position and thereby the second slot on the retainer may be held at the lower position. Upon rotation of the rotatable shaft to the second position the reduced diameter portion may move to an upper position and thereby cause the second slot on the retainer to move to the upper position and may thereby cause the retainer to move to the deployed position. This linear motion is aided by the arrangement of the retainer slot such that it only allows movement in the first direction towards and away from the opening of the housing. Movement in any other direction is restricted, albeit allowing for slight tolerances in the sizing.

The second slot may be positioned at any point on the retainer, however, it may be considered advantageous if the second slot is positioned proximate the lower surface of the retainer, such as in the lower 20% of the retainer slot. This arrangement may cause a greater portion of the retainer to extend beyond the opening in the deployed position.

As will be appreciated, the reduced diameter portion of the rotatable shaft may effectively form the pin of the scotch yoke mechanism. Consequently, the retainer, along with the second slot, may form the sliding "yoke" within the mechanism.

Indeed, as an alternative, the rotatable shaft may comprise a pin extending from an end surface of the rotatable shaft. In this arrangement, the rotatable shaft may only extend through one side wall of the housing to the frame and retainer, and not extend through the entirety of the housing. The pin may comprise any of the features described in relation to the reduced diameter portion of the rotatable shaft, and the operation of the mechanism to convert rotary motion of the rotatable shaft into linear motion of the retainer may be as described above.

The known design for the retainer discussed above allows the position of the latch to be adjusted using the bolts and washers to account for different sized container within the compartment. Accordingly, it is preferably that retainer assembly of the present invention also allows for the position of the retainer to be adjusted. However, it should be appreciated that this is an entirely optional feature. Accordingly, the frame may comprise one or more protrusions arranged to engaged with one or more positioning slots within an inner wall of the housing. The one or more protrusions may be able to translate along the length of the one or more positioning slots to thereby adjust the position of the frame within the housing.

In this arrangement, the one or more positioning slots may be located within one or both of the side walls of the housing which may extend parallel with the second direction, i.e. parallel with the central axis of the rotatable shaft. Consequently, the one or more protrusions of the frame may extend outwardly from the frame in a direction which is perpendicular to the second direction, i.e. the central axis of the rotatable shaft, and perpendicular to the first direction.

In the case where the frame comprises a plurality of protrusions, consequently the housing may comprise a plurality of positioning slots. In particular, the number of protrusions on the frame may correspond to the number of positioning slots in the housing. Each of the plurality of protrusions may be spaced along an outer wall of frame and may be offset from each other in an axis which is parallel to the first direction. Likewise, each of the plurality of positioning slots may be spaced along an inner side wall of the housing and may be offset from each other in an axis which is parallel to the first direction.

The one or more positioning slots may extend along the inner wall of the housing in a direction parallel to the second direction, i.e. the central axis of the rotatable shaft, and perpendicular to the first direction.

The length of the reduced diameter portion of the rotatable shaft may correspond to the length of the one or more positioning slots. In particular, the length of the reduced diameter portion of the shaft may extend for at least the length of the one or more positioning slots. This means that regardless of the position of the frame within the housing, the arrangement between the rotatable shaft and the retainer whereby rotation of the rotatable shaft between a first position and second position causes linear motion of the retainer within the retainer slot in the first direction between a stowed position and a deployed position can be maintained.

The length of each of the one or more positioning slots, and also consequently the length of the reduced diameter portion, may correspond to the degree of adjustment required for the position of the retainer within the housing. For example, the length of each of the one or more positioning slots may extend along a length.

Once the frame has been positioned at the desired location relative to the housing, the frame may be fixed relative to the housing by one or more removable fastening devices. The one or more removable fastening devices may be arranged to fasten the frame to the housing via through-holes in at least one of the one or more protrusions. In the case of the frame comprising a plurality of protrusions offset along an axis parallel to the first direction, each of the protrusions may comprise a through-hole in order to allow access for the fastener.

The side surfaces of the one or more positioning slots may comprise slits to provide access for the one or more removable fastening devices. As such, when in position, each of the one or more fastening devices may extend through the slits in each of the side surfaces of the one or more positioning slots and the through-holes located within each of the one or more protrusions of the frame. Each of the one or more fastening devices may extend to the bottom surface of the housing, wherein the bottom surface of the housing may be the surface opposite the opening. The one or more fastening devices may engage with the bottom of the housing in order to secure the frame in position relative to the housing.

The removable fastening devices may comprise a screw or bolt, which may be used in combination with a washer or nut.

In use, the above arrangement allows the frame to move or translate within the housing in the first direction so that it can be positioned at the required location depending on the size of the container within the compartment. This results in a retainer assembly with a reduced likelihood of failure due to the load being transferred to the housing instead of the shaft, and also retains the adjustability of the known design discussed above.

It will be appreciated from the above discussion that the retainer itself may be held in position in the first direction as the frame is held in position by the fastening means, and the retainer slot is arranged such that movement of the retainer in the first direction is restricted.

There is also a desire for it to be possible to effectively maintain the components of the retainer assembly. For example, it may be necessary to repair or replace one or more of the frame, the retainer, the fastening means and the rotatable shaft, and it is therefore preferable if each of these components can be removed from the assembly if necessary. Accordingly, each of the one or more positioning slots comprise an open end adjacent to a recess within an inner side wall of the housing. The open end of each of the one or more positioning slots may be aligned to be at the same point in the first direction. In use, it may therefore be possible to translate the one or more protrusions of the frame along the length of the one or more positioning slots such that the one or more protrusions may exit the positioning slot via the respective open ends.

Further, the recess may extend to the opening of the housing to allow removal of the frame from the housing. It will be appreciated that prior to doing so it may be necessary to remove the removeable shaft from the assembly. In the arrangement discussed above where the rotatable shaft is formed of separate portions, namely a first, second and third portion, wherein the third portion may be the reduced diameter portion, the rotatable shaft may be arranged such each portion can be separated to thereby allow the rotatable shaft to be removed from the assembly.

The invention has been described above in relation to the specific retainer assembly. However, it will be appreciated that the invention may also extend to the implementation of the retainer assembly within the aircraft galley compartment itself.

Therefore, viewed form a second aspect of the present invention, there is provided an aircraft galley compartment for housing at least one container, the compartment comprising: an opening for receiving the at least one container; at least one panel forming a surface of the compartment, wherein the at least one panel comprises a retainer assembly as described in the first aspect above; and a rotatable handle arranged at a first end of the panel to allow a user to rotate the rotatable shaft.

The retainer assembly may comprise any of the features described in the first aspect above.

Typically, the retainer assembly will be positioned on the bottom surface of the container, and therefore the at least one panel may form a bottom surface of the compartment. However, in alternative arrangements the retainer assembly may be provided on a side surface of the compartment or a top surface of the compartment, and so the at least one panel may form a side surface or top surface of the compartment respectively.

In addition, the compartment may comprise more than one retainer assembly and as such may comprise more than one panel, wherein each panel may comprise a retainer assembly. For example, the compartment may comprise four panels forming a surface of the compartment, wherein each panel may comprise a retainer assembly. This may be beneficial in reducing the load on each individual retainer assembly. As another example, the compartment may comprise two panels, one forming a bottom surface and one forming a top surface of the compartment, wherein each of the two panels may comprise a retainer assembly.

The opening of the housing in the retainer assembly may be arranged so that it is flush with the surface of the panel and so that it faces into the compartment.

In the stowed position the retainer may be configured to be within housing such that it does not extend into the compartment. In use, this therefore means that the container may move into and out of the compartment, such as it is required by the aircraft crew.

In the deployed position, the retainer may be configured to extend through the opening in the housing such that at least a portion of the retainer is located within the compartment to therefore retain the at least one container in position. In this arrangement, at least a portion of the retained may be positioned in the path of the container so that it is not able to move within the compartment.

Aircraft galley compartments often house more than one container, typically two containers. The containers may be located within the compartment so that their end surfaces are facing each other, for instance the cross section of the container may correspond approximately to the cross section of each container. The compartment may comprise an open end, i.e. the front end of the compartment which provides access to the containers, and a closed end, i.e. the back end.

In the case of more than one container being housed within the compartment, the front container, i.e. the container closest to the open end of the compartment, may be retained using a first retainer assembly. The retainer assembly used for retaining the front container may be the retainer assembly described in the first aspect, or another retainer assembly. The back container, i.e. the container closest to the closed end of the compartment, may be retained by a retainer assembly as described above.

Accordingly, the retainer assembly may be positioned on the at least one panel at the mid-point between the front end, i.e. closed end and the back end, i.e. closed end, of the compartment, or at a point adjacent to the end surface of the back container away from the closed end of the compartment. Consequently, the rotatable shaft may extend from the end of the panel proximate the front end of the compartment to the point on the panel at which the retainer assembly may be located, e.g. the mid-point.

The rotatable handle may be directly connected to the rotatable shaft such that in operation as the user rotates the handle, the rotatable shaft is rotated accordingly. The rotatable handle may extend from the front end of the container.

The use of separate retainer assemblies to retain the first and second containers result in a reduced load on the retainers used to retain the front container, thus extending the life-time of both sets of retainers.

It will be appreciated that the principles of the present invention also extend to a method for retainer a container within an aircraft galley compartment. In this regard, viewed from a third aspect, there is provided a method of retaining a container within a compartment of an aircraft galley, the method comprising: providing a housing comprising opening; providing a frame defining a retainer slot located within the housing and arranged to be fixed relative to the housing, locating a retainer in the retainer slot, wherein the retainer and retainer slot allow linear motion of the retainer within the retainer slot in a first direction away from and towards the opening and restrict movement of the retainer in all other directions; and providing a rotatable shaft extending through at least a first wall of the housing and the frame in a second direction perpendicular to the first direction; rotating the rotatable shaft between a first position and a second position to cause a linear motion of the retainer within the retainer slot in the first direction between a stowed position and a deployed position.

As discussed in relation to the first aspect above, the linear motion of the retainer may be caused by a scotch yoke or slotted mechanism which may be formed by a second slot in the retainer and a reduced diameter portion of the rotatable shaft, wherein the reduced diameter portion of the rotatable shaft may be offset from the centreline of the rotatable shaft.

The method according to the third aspect may be considered a method of using the retainer assembly described in the first aspect. Accordingly, any features discussed in relation to the operation of the retainer assembly in the first aspect may apply to the method of retaining a container as discussed in the third aspect.

As discussed in the background section above, Figures 1A and 1B depicts a known design of a retainer assembly 1 according to the prior art that is used for retainer a container within a compartment of an aircraft galley. The container are typically known as Standard Unit (SU) containers.

In particular, the retainer assembly 1 includes a housing 2 with a shaft 3 extending through the housing 2. A latch 4 acts as a retainer and is mounted to a threaded portion of the shaft 3 and held in position at a point along the shaft using nuts 5 either side of the latch 4.

Figure 1A depicts the known retainer assembly 1 in a stowed configuration whereby the latch 4 is below an opening in the top of the housing 2. In order to move to the deployed configuration, a user is required to rotate the latch 4 through 90 degrees so that it extends out of the housing 2 through the opening and is perpendicular with the opening.

Although the overall design and configuration of SU containers may be standardised, there can be some variation in the size, more specifically length of the container. It is therefore necessary for the position of the latch 4 to be adjustable. This is achieved loosening the nuts 5 and sliding the latch 4 along the shaft 3 as depicted in Figure 1B.

Several problems have been identified with this known design as discussed in the background section above. Firstly, overtime the washers used to constrain the blade in the required position can become loose, which can result in the container being improperly retained in position. Secondly, over time the rods on which the retainer blades are mounted bend due to the loads received by the retainer blade from the containers.

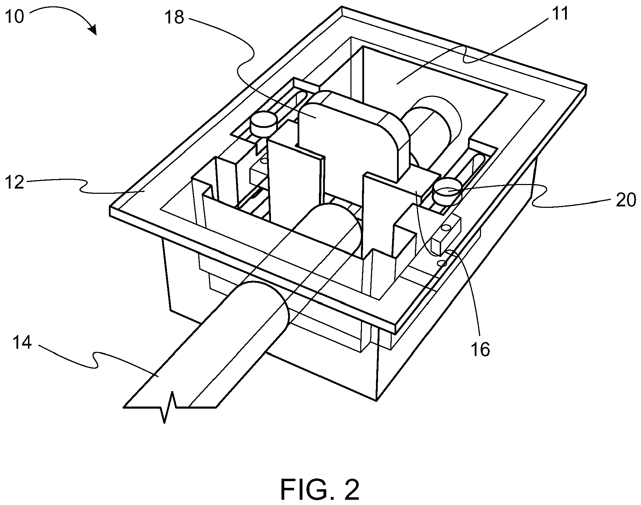

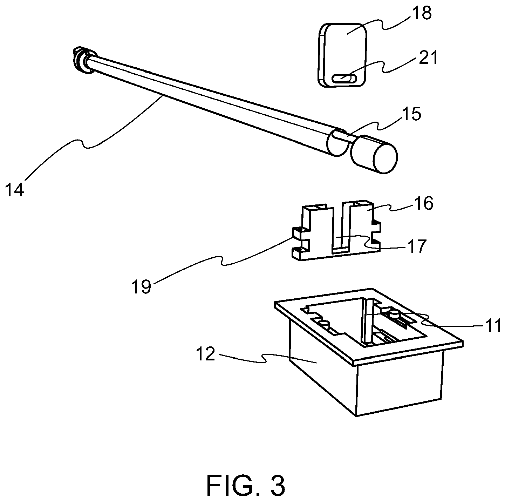

Figure 2 depicts a retainer assembly 10 according to the present invention which overcomes the abovementioned problems. Figure 3 depicts an exploded view of the retainer assembly 10 and reference will be made to both Figures 2 and 3 when describing the retainer assembly 10.

The retainer assembly 10 comprises a housing 12 with an opening 11. A frame 16 is provided within the housing 12 and is fixed to the housing at each side using fasteners 20. The frame 16 comprises a retainer slot 17 which extends the length of the frame 16.

The retainer slot 17 houses a retainer 18, or at least a portion of the retainer 18 as shown in Figure 2, and a second slot 21 is provided towards the bottom end of the retainer 18 as shown in Figure 3.

The retainer assembly 10 includes a rotatable shaft 14 which extends the length of the housing 12 and extends through the frame 16 and the second slot 21 of the retainer 18. The rotatable shaft 14 includes a reduced diameter portion 15, shown in Figure 3, which is offset from the central axis of the rotatable shaft 14 as a whole. In other words, the reduced diameter portion 15 of the rotatable shaft 14 is located proximate the outer circumference of the rotatable shaft 14.

The retainer slot 17 and the retainer 18 are sized to allow the retainer 18 to slide into and out of the retainer slot 17 in a direction away from and towards the opening 11, wherein said direction is perpendicular to the opening 11 and is referred to herein as the "first direction". Meanwhile, movement of the retainer 18 relative to the frame in other directions is restricted. In particular, movement in the direction parallel to the rotatable shaft, hereinafter referred to as the "second direction", is prevented. Additionally, movement of the retainer in a direction which is perpendicular to the shaft and perpendicular to the first direction, hereinafter referred to as the "third direction" is also restricted.

The above arrangement effectively means that the position of the retainer is fixed relative to the housing in second and third direction by the fact that it is housed within the retainer slot of the frame, which itself is fixed to the housing.

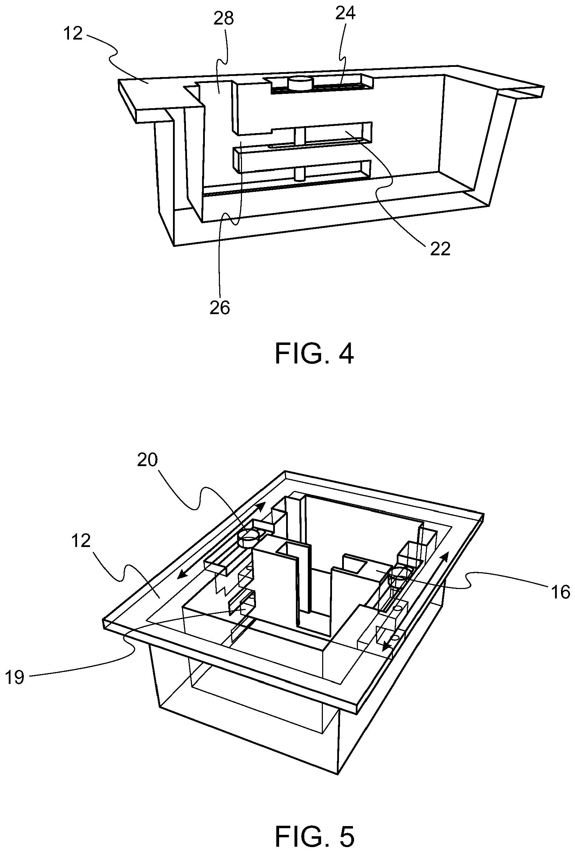

The frame 16 comprises a plurality of protrusions 19 on each side which extend outwardly. The protrusions 19 are arranged to engage with positioning slots 22 which are depicted in Figure 4. The positioning slots 22 extend along a portion of the side walls of the housing 12 so that the position of the frame 16 within the housing can be adjusted to account for different sizes of SU containers.

The frame 16 is fixed in the desired position using the fastening means 20 which extend through the protrusions 19 via through-holes, and elongated slits 24 within the side surfaces of the positioning slots 22.

In order to adjust the position of the frame 16, the fastening means 20 are removed and the frame 16 is move in the second direction, i.e. the direction parallel with the rotatable shaft, so that the protrusions 19 translate within the positioning slots 22. Once in the desired position, the frame 16 is fixed in position relative to the housing using the fastening means 20.

The positioning slots 22 also each comprise an open end 26 into a recess 28. The recess 28 extends to the opening 11 of the housing 12. This means that the frame 16 can be removed entirely from the housing to allow for it to be replaced or maintained as necessary.

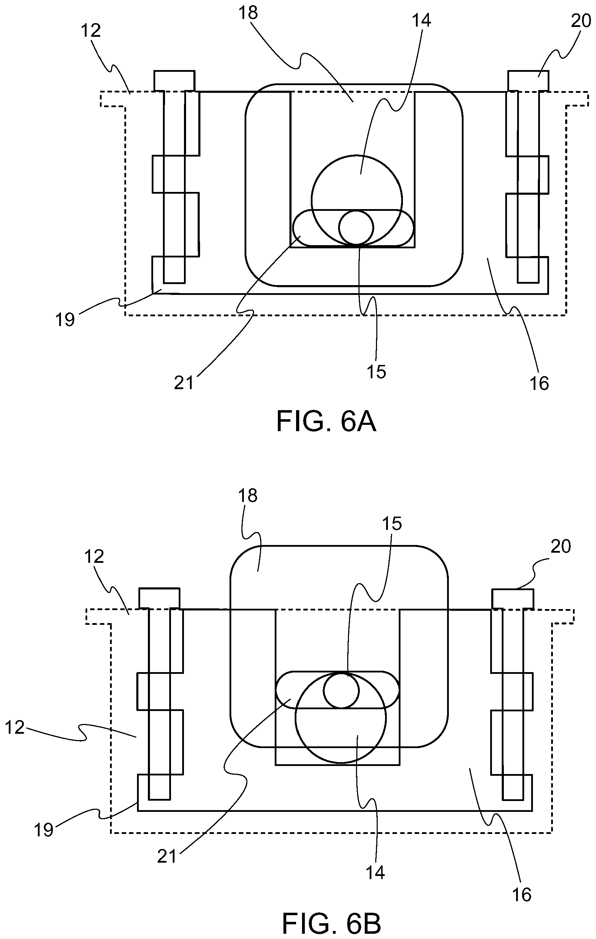

The arrangement between the rotatable shaft 14, specifically the reduced diameter portion 15, and the retainer, specifically the second slot 21, is configured so that rotation of the rotatable shaft 14 between a first position and a second position causes the retainer 18 to move within the retainer slot in the first direction between a stowed position and a deployed position. The arrangement comprises a scotch yoke or slotted link mechanism and is depicted in both positions in Figures 6A and 6B, wherein Figure 6A shows the stowed position and Figure 6B shows the deployed position.

In particular, the reduced diameter portion 15 of the rotatable shaft 14 forms the pin of a scotch yoke mechanism which moves within the retainer slot 21. As the rotatable shaft 14 is rotated, the reduced diameter portion 15, which is located proximate the outer circumference of the rotatable shaft 14, moves from the lower position shown in Figure 6A to the upper position shown in Figure 6B. In doing so the reduced diameter portion 15 moves within the slot 21 and causes the retainer 18 to move in an upwardly direction within the retainer slot 15.

While the present example utilises a scotch yok mechanism, any mechanism capable of transferring rotary motion to linear motion would be applicable. For example, the rotatable shaft 14 may comprise a cam located below the retainer 18.

In the stowed position, the retainer 18 is located so that it is substantially within the retainer slot and below the opening 11 in the housing 12. In the arrangement shown in Figure 6A a small portion of the retainer 18 is located above the opening of the housing 12. However, as will be appreciated, in the stowed position, the retainer 18 is positioned such that it does not block the path of a container located in the aircraft galley compartment which would be above the retainer assembly 10 as depicted in Figure 6A.

In the deployed position, the retainer 18 is located within the slot such that a significant portion extends out of the opening 11 in the housing as shown in Figure 6B. The significant portion of the retainer 18 extending out of the housing is such that it extends into the path of a container located within the galley compartment above, in order to retain said contain in position.

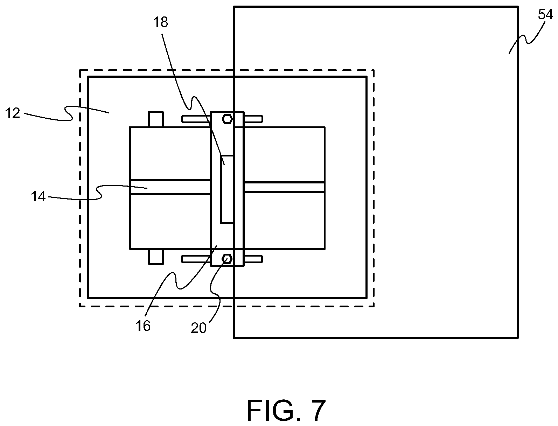

Figure 7 depicts a schematic plan view of the retainer assembly 10 in operation with a container 54 in position within the compartment. In the deployed configuration, the retainer 18 abuts an end surface of the container and holds it in position. In contrast to the existing design whereby the load impacted on the retainer 18 from the container is transferred to the housing 12, the load from the container is transferred to the stronger housing, via the frame 18.

The housing 12 is typically embedded within the panel forming a surface of the compartment, and is therefore stronger than the shaft which extends through the length of the housing and is therefore prone to bending. The result is therefore a more robust retainer assembly, with a reduced chance of failure, less maintenance requirements and a longer operating lifetime.

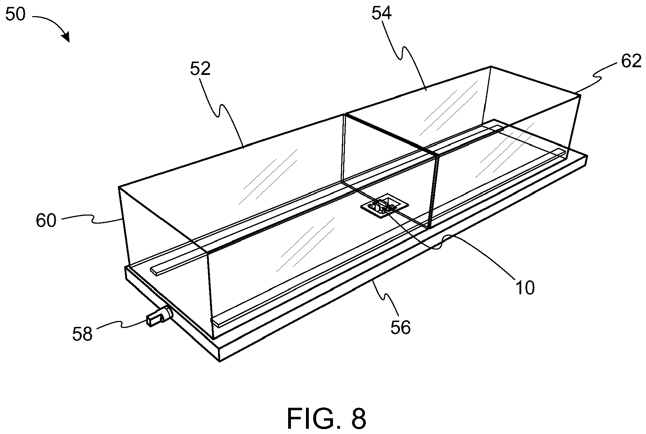

Figure 8 depicts a partial view of an aircraft galley compartment 50. For clarity, only a bottom surface panel 56 is shown, and the side surfaces and top surface have been removed.

The aircraft galley compartment 50 comprises space for two SU containers, a front container 52 and a back container 54. The two containers are placed end-on-end within the compartment 50.

The compartment 50 comprises an open end 60 which provides access to the containers for the crew, and a closed end 62 at the opposite end of the compartment relative to the open end 60.

The front container 52 is retained in position using a first retainer, or set of retainers, which are not shown in Figure 8. In order to alleviate the load on the first retainer, the back container 54 is held in position using the retainer assembly 10. In Figure 8, the retainer assembly 10 is located within the panel 56 forming the bottom surface of the housing.

The rotatable shaft 14 of the retainer assembly 10 extends through the panel 56 and is connected to a rotatable handle 58 at the open end of the compartment 50. In operation, a user, such as a member of the cabin crew, is able to rotate the rotatable handle 58 so that the rotatable shaft 14 rotates and causes the retainer 10 to move between the stowed position and the deployed position.

## Claims

1. A retainer assembly for retaining a container within a compartment of an aircraft galley, the assembly comprising:
a housing comprising an opening;
a frame defining a retainer slot located within the housing and arranged to be fixed relative to the housing, wherein the retainer slot,
a retainer configured to be located in the retainer slot such that the retainer extends from the end of the retainer slot towards the opening of the housing, wherein the retainer and retainer slot are arranged to allow linear motion of the retainer within the retainer slot in a first direction away from and towards the opening and restrict movement of the retainer in all other directions; and
a rotatable shaft extending through at least a first wall of the housing and the frame in a second direction perpendicular to the first direction;
wherein the arrangement of the rotatable shaft and the retainer is configured such that a rotation of the rotatable shaft between a first position and second position causes linear motion of the retainer within the retainer slot in the first direction between a stowed position and a deployed position.

2. The retainer assembly of claim 1, wherein in the stowed position the retainer is configured to be positioned within the housing, and in the deployed position at least a portion of the retainer is configured to be positioned outside of the housing via the opening.

3. The retainer assembly of claim 1 or 2, wherein the arrangement of the rotatable shaft and the retainer comprises a scotch yoke or slotted link mechanism.

4. The retainer assembly of claim 1, 2 or 3, wherein the rotatable shaft comprises a reduced diameter portion offset from the centreline of the rotatable shaft.

5. The retainer assembly of claim 4, wherein the reduced diameter portion of the rotatable shaft is arranged to engage with the retainer such that the rotation of the rotatable shaft causes the linear motion of the retainer within the retainer slot.

6. The retainer assembly of claim 4 or 5, wherein the retainer comprises a second slot configured to house the reduced diameter portion of the rotatable shaft to form a scotch yoke or slotted link mechanism.

7. The retainer assembly of any preceding claim, wherein the frame comprises one or more protrusions arranged to engage with one or more positioning slots within an inner wall of the housing, wherein the one or more protrusions are able translate along the length of the one or more positioning slots to thereby adjust the position of the frame within the housing.

8. The retainer assembly of claim 7, wherein the frame is fixed relative to the housing by one or more removable fastening devices via through-holes in at least one of the one or more protrusions.

9. The retainer assembly of claim 7 or 8, when dependent on claim 4, wherein a length of the reduced diameter portion of the shaft corresponds to a length of the one or more positioning slots.

10. The retainer assembly of claim 7, 8 or 9, wherein each of the one or more positioning slots comprise an open end adjacent to a recess within an inner side wall of the container, wherein the recess extends to the opening to allow removal of the frame from the housing.

11. An aircraft galley compartment for housing at least one container, the compartment comprising:
an opening for receiving the at least one container;
at least one panel forming a surface of the compartment, wherein the at least one panel comprises a retainer assembly as claimed in any preceding claim; and
a rotatable handle arranged at a first end of the panel to allow a user to rotate the rotatable shaft.

12. The aircraft galley compartment of claim 11, wherein in the stowed position the retainer is configured to be within housing such that it does not extend into the compartment, and in the deployed position the retainer is configured to extend through the opening such that at least a portion of the retainer is located within the compartment to retain the at least one container in position.

13. The aircraft galley compartment of claim 11 or 12, wherein the compartment is for housing at least two containers, and wherein the retainer assembly is positioned at a point between the at least two containers.

14. A method of retaining a container within a compartment of an aircraft galley, the method comprising:
providing a housing comprising opening;
providing a frame defining a retainer slot located within the housing and arranged to be fixed relative to the housing,
locating a retainer in the retainer slot, wherein the retainer and retainer slot allow linear motion of the retainer within the retainer slot in a first direction away from and towards the opening and restrict movement of the retainer in all other directions; and
providing a rotatable shaft extending through at least a first wall of the housing and the frame in a second direction perpendicular to the first direction;
rotating the rotatable shaft between a first position and a second position to cause a linear motion of the retainer within the retainer slot in the first direction between a stowed position and a deployed position.

15. The method of claim 14, wherein the linear motion of the retainer is caused by a scotch yoke or slotted mechanism formed by a second slot in the retainer and a reduced diameter portion of the rotatable shaft, wherein the reduced diameter portion of the rotatable shaft is offset from the centreline of the rotatable shaft.
